# EUROPÄISCHE PATENTSCHRIFT

(11) **EP 1 221 254 B1**
(45) Veröffentlichungstag und Bekanntmachung des Hinweises auf die Patenterteilung: **02.07.2008**
(21) Anmeldenummer: 00938549.3
(22) Anmeldetag: 12.05.2000
(51) Int. Cl.: H04M 19/04

(54) **VERFAHREN ZUR ANRUFSIGNALISIERUNG UND KOMMUNIKATIONSENDGERÄT**
METHOD FOR SIGNALLING CALLS AND COMMUNICATIONS TERMINAL
PROCEDE DE SIGNALISATION D'APPEL, ET TERMINAL DE COMMUNICATION

(30) Priorität: 14.10.1999 DE 19949608
(43) Veröffentlichungstag der Anmeldung: 10.07.2002
(73) Patentinhaber: Nokia Siemens Networks GmbH & Co. KG, 81541 München (DE)
(72) Erfinder: PETER, Martin, D-80333 München (DE)
(86) Internationale Anmeldenummer: PCT/DE2000/001493
(87) Internationale Veröffentlichungsnummer: WO 2001/028221

(56) Entgegenhaltungen:
- EP-A- 0 851 649
- WO-A-98/05151
- WO-A-99/16265

## Beschreibung

Die Erfindung betrifft ein Verfahren zur Anrufsignalisierung und Kommunikationsendgeräte, die insbesondere zur Durchführung derartiger Verfahren eingerichtet sind.

Die rasante technische Entwicklung auf dem Gebiet der Telekommunikation hat in letzter Zeit zu einer weiten Verbreitung von Mobiltelefonen geführt. Im Zuge dieser Entwicklung haben sich Mobiltelefone etabliert, die zur Anrufsignalisierung, d.h. zu Signalisierung eines ankommenden Rufes, unterschiedliche Ruftonmelodien ausgeben können.

Zu diesem Zweck sind bei neueren Mobiltelefonen in einem elektronischen Telefonbuch, das sich im Mobiltelefon befindet, Teilnehmern oder Teilnehmergruppen eingetragen, denen unterschiedliche Ruftonmelodien zugeordnet sind. Bei einem ankommenden Ruf eines Teilnehmers, dessen Identität durch die Übermittlung seiner Rufnummer erkannt werden kann, wird die dieser Rufnummer und somit diesem Teilnehmer zugeordnete Ruftonmelodie ausgegeben. Der rufende Teilnehmer hat dabei keinen Einfluss auf die Auswahl oder Gestaltung der Ruftonmelodie, die bei einem von ihm ausgelösten Verbindungsaufbau zur Anrufsignalisierung am gerufenen Kommunikationsendgerät ausgegeben wird.

Ein Verfahren zur Programmierung von Telefonruftönen ist beispielsweise in der Druckschrift EP 0 851 649 beschrieben. Mit einer Ruftonerkennung versehene Ruftöne können zu einem Mobiltelefon übertragen und dort für eine weitere Verwendung gespeichert werden.

Es ist Aufgabe der vorliegenden Erfindung, Verfahren zur Anrufsignalisierung und Kommunikationsendgeräte anzugeben, die es dem rufenden Teilnehmer ermöglichen, bei einem von ihm ausgelösten Verbindungsaufbau zur Anrufsignalisierung am gerufenen Kommunikationsendgerät ausgegebene Ruftonmelodie zu beeinflussen.

Diese Aufgabe wird durch die Merkmale der unabhängigen Ansprüche gelöst. Vorteilhafte und zweckmäßige Weiterbildungen ergeben sich aus den abhängigen Ansprüchen.

Erfindungsgemäß werden also bei einem durch ein rufendes Kommunikationsendgerät ausgelösten Verbindungsaufbau zu einem gerufenen Kommunikationsendgerät automatisch codierte Audioinformationen von dem rufenden Kommunikationsendgerät an das gerufene Kommunikationsendgerät übertragen, und zur Anrufsignalisierung von dem gerufenen Kommunikationsendgerät in eine Ruftonmelodie umgesetzt und ausgegeben.

Die Formulierung "bei einem Verbindungsaufbau" bedeutet dabei auch "vor", "während" oder "nach" einem Verbindungsaufbau, wobei die Anrufsignalisierung jedoch dem Verbindungsaufbau fest zugeordnet ist oder sogar Teil des Verbindungsaufbaus ist. Der Verbindungsaufbau kann dabei über ein leitungsvermitteltes oder ein paketvermitteltes Vermittlungssystem erfolgen. So kann die Erfindung insbesondere in Mobilfunksystemen, ISDN-Systemen oder Internet-Telefoniesystemen zum Einsatz kommen. Unter "Ruftonmelodie" versteht man im Rahmen der Erfindung auch beliebige analoge Audiosignale, die zur Anrufsignalisierung geeignet sind. Unter "codierte Audioinformationen" versteht man alle Informationen die zur Beschreibung von Audiosignalen geeignet sind; so kann es sich dabei um digitale Audioinformationen, insbesondere in komprimierter Form, oder um alphanumerische Zeichen oder Zeichenfolgen handeln, denen beispielsweise in Form einer Tabelle Ruftonmelodien zugeordnet sind, wobei diese Zuordnungsinformationen beispielsweise sowohl im rufenden als auch im gerufenen Kommunikationsendgerät abgespeichert sein können.

Die mit der Neuerung verbundenen Vorteile liegen vor allem darin, daß es nun einem rufenden Teilnehmer möglich ist, die bei einem gerufenen Teilnehmer zur Anrufsignalisierung ausgegebene Ruftonmelodie selbst auszuwählen und sogar zu gestalten. So ist es möglich, die Ruftonmelodie entsprechend einem aktuellen Anlaß zu wählen, beispielsweise bei einem Anruf zur Geburtstagsgratulation eine "Happy Birthday"-Melodie auszuwählen.

Die Übertragung bzw. Signalisierung der entsprechenden codierten Audioinformationen kann dabei je nach Ausführungsvariante über eigens für diesen Zweck vorgesehene oder für einen anderen Zweck eh schon vorhandene Signalisierungs- oder Nutzdatenkanäle realisiert sein; sie kann als Teil des Verbindungsaufbaus, oder in Form einer separaten Verbindung erfolgen.

Bei einer vorteilhaften Weiterbildung der Erfindung erfolgt die Übertragung bzw. Signalisierung der entsprechenden codierten Audioinformationen über den Kurznachrichtendienst (Short Message Service) eines Mobilfunksystems.

Zur Lösung der Aufgabe werden ferner Kommunikationsendgeräte angegeben, welche insbesondere zur Durchführung des erfindungsgemäßen Verfahrens oder einer seiner Weiterbildungen geeignet sind. Die in weiteren oder abhängigen Ansprüchen beschriebenen Weiterbildungen, Ausgestaltungen und Ausführungsvarianten sind sowohl in Kombination mit dem Verfahren als auch in Kombination mit den Kommunikationsendgeräten in der Erfindung enthalten.

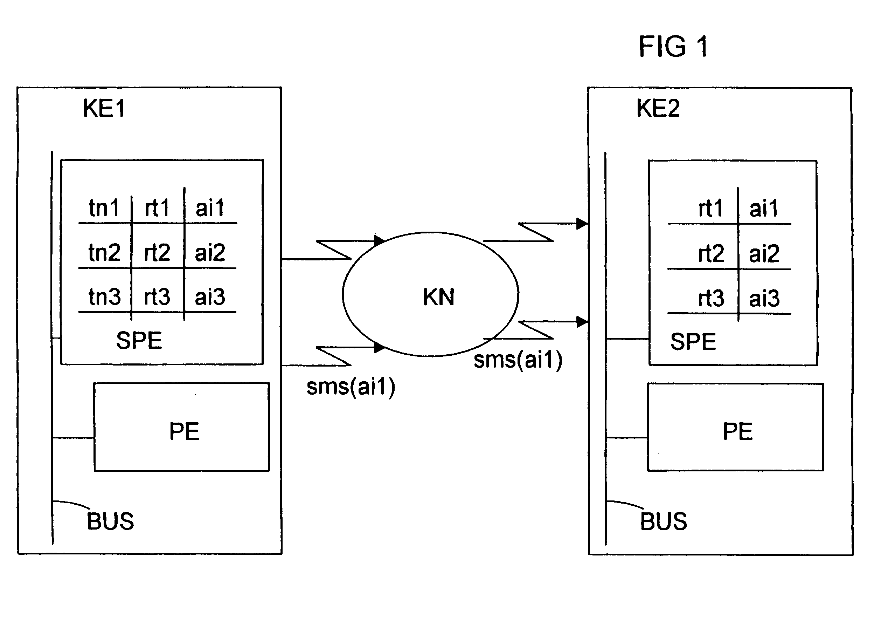

Die Erfindung wird im folgenden anhand bevorzugter Ausführungsbeispiele näher beschrieben, wobei die darin enthaltenen Merkmale auch in anderen Kombinationen durch die Erfindung umfaßt sein können. Zur Erläuterung dieser Ausführungsbeispiele dient die Figur 1, welche eine schematische Darstellung einer Ausführungsvariante des erfindungsgemäßen Verfahrens sowie zu diesem Zweck verwendete Kommunikationsendgeräte darstellt.

Figur 1 zeigt einen durch ein rufendes Kommunikationsendgerät KE1 ausgelösten Verbindungsaufbau vom rufenden Kommunikationsendgerät KE1 zum gerufenen Kommunikationsendgerät KE2 über ein Kommunikationsnetz KN. Bei den Kommunikationsendgeräten KE1, KE2 kann es sich beispielsweise um Mobiltelefone handeln. Diese Mobiltelefone weisen die üblichen Komponenten herkömmlicher Mobiltelefone auf, die daher zum großen Teil nicht in der Figur dargestellt sind. Die Figur zeigt die Mobiltelefone KE1, KE2 mit einer Prozessoreinrichtung PE, die beispielsweise durch einen Mikrocontroller realisiert sein kann und einer Speichereinrichtung SPE, bei der es sich um flüchtige oder nichtflüchtige Speicherbausteine handeln kann, welche in einer Ausführungsvariante der Erfindung auch Teil der Prozessoreinrichtung PE sein können oder in einer anderen Ausführungsvariante auf einem als Chipkarte ausgestalteten Teilnehmeridentifizierungsmodul verwirklicht sein können. Zur Verbindung von der Prozessoreinrichtung PE zur Speichereinrichtung SPE und zu den anderen nicht dargestellten Komponenten des Mobilfunktelefons ist ein Bussystem BUS vorgesehen.

In der Speichereinrichtung SPE des rufenden Mobiltelefons KE1 ist ein Telefonbuch abgespeichert mit unterschiedlichen Teilnehmereinträgen tn, die aus dem Namen der zu rufenden Teilnehmer und deren Rufnummer bestehen kann; diesen sind Ruftonmelodien rt zugeordnet, die bei der Darstellung von Telefonbucheinträgen im Display des Mobiltelefons mit dem Namen der Melodie oder der Melodie entsprechenden Noten dargestellt werden können. Außerdem sind den Teilnehmereinträgen tn Audioinformationen ai zur Beschreibung dieser Ruftonmelodien rt zugeordnet, die ebenfalls in derselben oder einer separaten Speichereinrichtung abgelegt sein können.

Je nach Ausführungsvariante der Erfindung kann es sich bei den codierten Audioinformationen ai um komprimierte Audiodaten oder um Steuerzeichen, beispielsweise alphanumerische Zeichenfolgen, handeln. Falls es sich bei den codierten Audioinformationen um komprimierte Audiodaten handelt, können diese durch entsprechende Prozessoren und Digital-/Analogwandler in Ruftonmelodien umgesetzt werden, so daß die Speicherung von Informationen über die Ruftonmelodie rt an sich nicht nötig ist; allerdings können die Ruftonmelodie beschreibende Informationen, wie beispielsweise der Name der Melodie oder Grafikdarstellungen entsprechender Noten abgespeichert sein. Handelt es sich bei den codierten Audioinformationen ai um alphanumerische Zeichenfolgen, so können ihnen in Form einer Tabelle Informationen zur Beschreibung der Ruftonmelodien rt zugeordnet sein. Dabei kann es sich bei den Informationen zur Beschreibung der Ruftonmelodien rt selbst um komprimierte Audiodaten handeln.

Beim Aufbau einer Verbindung von dem rufenden Mobiltelefon KE1 zu einem gerufenen Mobiltelefon KE2, das dem gerufenen Teilnehmer tn1 zugeordnet ist, über ein Mobilfunksystem KN, wie beispielsweise das weitverbreitete GSM-System, wird vor, während oder nach dem Auslösen des Verbindungsaufbaus automatisch über eine Kurznachricht sms(ai1) die diesem Teilnehmer tn1 zugeordneten Audioinformationen ai1 übermittelt. Diese Kurznachricht sms(ai1) wird von dem gerufenen Mobiltelefon KE2 empfangen, beispielsweise durch spezielle am Anfang der Kurznachricht stehende Zeichenfolgen als spezielle Kurznachricht, die für eine Anrufsignalisierung zu verwendende Audioinformation enthält, erkannt. Die codierten Audioinformationen ai1 werden mittels Tabelle und/oder entsprechender Prozessoren und Digital-/Analogwandler in eine Ruftonmelodie rt1 umgesetzt und diese zur Anrufsignalisierung ausgegeben.

Bei einer Ausführungsvariante der Erfindung ist beim Verbindungsaufbau beispielsweise über eine im Display des Mobiltelefons dargestellte Menüstruktur die gewünschte Ruftonmelodie, die zur Anrufsignalisierung an ein gerufenes Mobiltelefon übermittelt werden soll, aus einer Vielzahl von Ruftonmelodien auswählbar.

Eine Weiterbildung der Erfindung sieht vor, daß die in dem Telefonbuch den unterschiedlichen Teilnehmern zugeordneten Ruftonmelodien auch zu einer Ruftonsignalisierung bei einem ankommenden Ruf verwendet wird, wobei die Ruftonmelodie zur Anrufsignalisierung ausgegeben wird, die dem rufenden Teilnehmer zugeordnet ist.

Die Übertragung bzw. Signalisierung der entsprechenden codierten Audioinformationen kann bei anderen Ausführungsvarianten über eigens für diesen Zweck vorgesehene oder für einen anderen Zweck eh schon vorhandene Signalisierungs- oder Nutzdatenkanäle realisiert sein; sie kann als Teil des Verbindungsaufbaus, oder in Form einer separaten Verbindung erfolgen.

Andere Ausführungsvarianten der Erfindung sehen vor, daß Ruftonmelodien oder codierte Audioinformationen durch den rufenden Teilnehmer selbst komponiert werden können, über das Internet geladen werden können oder über ein Mikrophon aufgezeichnet werden können.

## Patentansprüche

1. Verfahren zur Anrufsignalisierung,
- bei dem bei einem durch ein rufendes Kommunikationsendgerät (KE1) ausgelösten Verbindungsaufbau zu einem gerufenen Kommunikationsendgerät (KE2) automatisch codierte Audioinformationen (ai1) von dem rufenden Kommunikationsendgerät (KE1) an das gerufene Kommunikationsendgerät (KE2) übertragen werden, und
- bei dem zur Anrufsignalisierung das gerufene Kommunikationsendgerät (KE) die codierten Audioinformationen (ai1) in eine Ruftonmelodie (rt1) umsetzt und ausgibt.

2. Verfahren nach Anspruch 1,
- bei dem es sich zumindest bei einem Kommunikationsendgerät (KE1) um ein Mobilfunktelefon handelt, und
- bei dem die codierten Audioinformationen in Form einer Kurznachricht (sms) übertragen werden.

3. Verfahren nach einem der vorhergehenden Ansprüche,
- bei dem am rufenden Kommunikationsendgerät (KE1) aus einer Vielzahl von Ruftonmelodie eine Ruftonmelodie auswählbar ist, und die diese Ruftonmelodie beschreibenden codierten Audioinformationen beim Verbindungsaufbau an ein gerufenes Kommunikationsendgerät übertragen werden.

4. Verfahren nach einem der vorhergehenden Ansprüche,
- bei dem Teilnehmereinträgen (tn) in einem Telefonbuch jeweils zumindest eine Ruftonmelodie (rt) zugeordnet ist,
- bei dem unterschiedlichen Teilnehmereinträgen (tn) unterschiedliche Ruftonmelodien (rt) zugeordnet sind, und
- bei dem bei einem Verbindungsaufbau zu einem gerufenen Kommunikationsendgerät (KE2), das einem Teilnehmereintrag (tn1) zugeordnet ist, die diesem Teilnehmereintrag zugeordnete Ruftonmelodie (rt1) in Form codierter Audioinformationen (ai1) an das gerufene Kommunikationsendgerät (KE2) übertragen wird.

5. Verfahren nach Anspruch 4,
bei dem zur Anrufsignalisierung eines ankommenden Rufes optional die dem rufenden Teilnehmer zugeordnete Ruftonmelodie ausgegeben wird.

6. Kommunikationsendgerät (KE1) mit
- einer Speichereinrichtung (SPE) zur Speicherung von unterschiedliche Ruftonmelodien (rt) beschreibenden codierten Audioinformationen (ai), und
- einer Prozessoreinrichtung (PE), die derart eingerichtet ist, daß bei einem durch das Kommunikationsendgerät (KE) ausgelösten Verbindungsaufbau zu einem gerufenen Kommunikationsendgerät (KE2) zur Anrufsignalisierung automatisch codierte Audioinformationen (ai1) von dem rufenden Kommunikationsendgerät (KE1) an ein gerufenes Kommunikationsendgerät (KE2) gesendet werden.

7. Kommunikationsendgerät (KE2) mit
- einer Speichereinrichtung (SPE) zur Speicherung von unterschiedliche Ruftonmelodien beschreibenden codierten Audioinformationen,
- einer Prozessoreinrichtung (PE), die derart eingerichtet ist, daß bei einem, durch ein rufendes Kommunikationsendgerät (KE1) ausgelösten, Verbindungsaufbau von dem rufenden Kommunikationsendgerät (KE1) gesendete codierte Audioinformationen (ai1) empfangen werden, und die codierten Audioinformationen (ai1) in eine Ruftonmelodie (rt1) zur Anrufsignalisierung umgesetzt werden.

## Claims

1. Method for signalling calls,
- in which, in the case of a connection setup initiated by a calling communications terminal (KE1) to a called communications terminal (KE2), coded audio information (ai1) is automatically transmitted from the calling communications terminal (KE1) to the called communications terminal (KE2), and
- in which, for signalling calls, the called communications terminal (KE2) converts the coded audio information (ai1) into a ringing tone melody (rt1) and outputs it.

2. Method according to Claim 1,
- in which at least one communications terminal (KE1) is a mobile radio telephone, and
- in which the coded audio information is transmitted in the form of a short message (sms).

3. Method according to one of the preceding claims,
- in which a ringing tone melody can be selected from a multiplicity of ringing tone melodies at the calling communications terminal (KE1) and the coded audio information describing this ringing tone melody is transmitted to a called communications terminal during the connection setup.

4. Method according to one of the preceding claims,
- in which at least one ringing tone melody (rt) is allocated in each case to subscriber entries (tn) in a directory,
- in which different ringing tone melodies (rt) are allocated to different subscriber entries (tn), and
- in which, in the case of a connection setup to a called communications terminal (KE2) which is allocated to a subscriber entry (tn1), the ringing tone melody (rt1) allocated to this subscriber entry is transmitted in the form of coded audio information (ai1) to the called communications terminal (KE2).

5. Method according to Claim 4, in which, for the signalling of an incoming call, the ringing tone melody allocated to the calling subscriber is optionally output.

6. Communications terminal (KE1) comprising
- a memory device (SPE) for storing coded audio information (ai) describing different ringing tone melodies (rt), and
- a processor device (PE) which is set up in such a manner that, in the case of a connection setup initiated by the communications terminal (KE) to a called communications terminal (KE2), coded audio information (ai1) is automatically transmitted from the calling communications terminal (KE1) to a called communications terminal (KE2) for the purpose of signalling calls.

7. Communications terminal (KE2) comprising
- a memory device (SPE) for storing coded audio information describing different ringing tone melodies,
- a processor device (PE) which is set up in such a manner that, in the case of a connection setup initiated by a calling communications terminal (KE1), coded audio information (ai1) transmitted by the calling communications terminal (KE1) is received and the coded audio information (ai1) is converted into a ringing tone melody (rt1) for signalling calls.

## Revendications

1. Procédé de signalisation d'appel, dans lequel
- à l'établissement d'une liaison avec un terminal de communication appelé (KE2), déclenché par un terminal de communication appelant (KE1), des informations audio codées automatiquement (ai1) sont transmises du terminal de communication appelant (KE1) vers le terminal de communication appelé (KE2) et
- le terminal de communication appelé (KE), aux fins de la signalisation d'appel, convertit les informations audio codées (ai1) en une mélodie d'appel (rt1) et les produit en sortie.

2. Procédé selon la revendication 1, dans lequel
- au moins un terminal de communication (KE1) est un téléphone radio mobile et
- les informations audio codées sont transmises sous la forme d'un message court (sms).

3. Procédé selon l'une des revendications précédentes, dans lequel une mélodie d'appel peut être sélectionnée sur le terminal de communication appelant (KE1) à partir d'une pluralité de mélodies d'appel et, à l'établissement d'une liaison, les informations audio codées qui décrivent cette mélodie d'appel sont transmises à un terminal de communication appelé.

4. Procédé selon l'une des revendications précédentes, dans lequel
- au moins une mélodie d'appel (rt) est associée respectivement à des entrées d'usagers (tn) dans un répertoire téléphonique,
- différentes mélodies d'appel (rt) sont associées à différentes entrées d'usagers (tn) et
- à l'établissement d'une liaison avec un terminal de communication appelé (KE2) qui est associé à une entrée d'usager (tn1), la mélodie d'appel (rt1) associée à cette entrée d'usager est transmise au terminal de communication appelé (KE2) sous la forme d'informations audio codées (ai1).

5. Procédé selon la revendication 4, dans lequel est optionnellement produite en sortie, aux fins de la signalisation d'appel d'un appel entrant, la mélodie d'appel associée à l'usager appelant.

6. Terminal de communication (KE1), comportant
- un dispositif de mémoire (SPE) pour stocker des informations audio codées (ai) qui décrivent différentes mélodies d'appel (rt) et
- un dispositif de processeur (PE) qui est aménagé de manière telle que, à l'établissement d'une liaison avec un terminal de communication appelé (KE2), déclenché par le terminal de communication (KE), des informations audio codées automatiquement (ai1) sont envoyées du terminal de communication appelant (KE1) vers un terminal de communication appelé (KE2) aux fins de la signalisation d'appel.

7. Terminal de communication (KE2), comportant
- un dispositif de mémoire (SPE) pour stocker des informations audio codées qui décrivent différentes mélodies d'appel,
- un dispositif de processeur (PE) qui est aménagé de manière telle que, à l'établissement d'une liaison déclenché par un terminal de communication appelant (KE1), des informations audio codées (ai1), émises par le terminal de communication appelant (KE1), sont reçues et les informations audio codées (ai1) sont converties en une mélodie d'appel (rt1) aux fins de la signalisation d'appel.
